(19) Europäisches Patentamt
European Patent Office
Office européen des brevets

(11) Publication number: 0 454 027 A2

# (12) EUROPEAN PATENT APPLICATION

(21) Application number: **91106439.2**

(51) Int. Cl.5: **C08G 59/50**, C09J 163/00

(22) Date of filing: **22.04.91**

(30) Priority: **25.04.90 JP 111059/90**

(43) Date of publication of application:
**30.10.91 Bulletin 91/44**

(84) Designated Contracting States:
**DE FR GB**

(71) Applicant: **SUNSTAR GIKEN KABUSHIKI KAISHA**
**7-1 Aketa-cho**
**Takatsuki-shi Osaka-fu(JP)**

(72) Inventor: **Murase, Masaaki**
**c/o Sunstar Giken K.K., 7-1, Aketa-cho**
**Takatsuki-shi, Osaka-fu(JP)**
Inventor: **Nakajima, Takao**
**c/o Sunstar Giken K.K., 7-1, Aketa-cho**
**Takatsuki-shi, Osaka-fu(JP)**

(74) Representative: **Kraus, Walter, Dr. et al**
**Patentanwälte Kraus, Weisert & Partner**
**Thomas-Wimmer-Ring 15**
**W-8000 München 22(DE)**

## (54) Adhesive for inner lining hose of water tube.

(57) Improved epoxy resin adhesive suitable for adhering an inner lining hose to water tube, which comprises as the main component an epoxy resin having a content of a saponifiable chlorine-containing group of not more than 0.25 % by weight and as the curing component a modified aliphatic polyamine and a liquid imidazole compound, which has long pot life, excellent curability in a short period of time at a medium temperature and no effect on quality of water.

EP 0 454 027 A2

This invention relates to an adhesive for inner lining hose of water tube, more particularly, a two-part epoxy resin adhesive for adhering an inner lining hose to an old water tube which has excellent properties such as long pot life, curability in a short period of time at a medium temperature and no effect on quality of water.

## Prior Art

Water tube embedded in ground is generally aged with lapse of time and rust mass and corrosion holes are formed within the inner face thereof. In order to repair such a damaged inner face of water tube, there has usually been used so-called hose-lining method which is carried out by preparing and cleaning the inner face of the tube, and then adhering an inner lining hose which is formed by coating an air- and water-tight film on the outer face of tubular fabric wherein the adhesion of the inner lining hose is practised by inserting the lining hose into the tube while turning inside out with the fluid pressure and warming the lining hose while maintaining the fluid pressure. In this case, following to the demand of the worker of the adhesion of the lining hose or user of water, it is necessary to complete the construction work within a short period of time such as within 8 hours. For such a purpose, however, excluding the period required for the preparation and cleaning of the tube, application of the adhesive, and post-treatment, there is only about 2 to 3 hours during which the curing of the adhesive must be achieved. Accordingly, the adhesive used for the adhesion of inner lining hose is required to be able to be cured within a short period of time at a medium temperature such as 50 to 70 °C, to have a long pot life and further not to give bad effect on the quality of water (tap water) (that is, no dissolution out of organic components of the adhesive to cause pollution of water).

As an adhesive for such a use, there is used a two-part epoxy resin adhesive comprising an epoxy resin as the main component and an amine curing agent. However, the main component epoxy resin contains a saponifiable chlorine-containing group

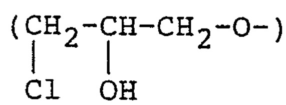

which affects on the quality of water. That is, when the epoxy resin has a high content of the saposifiable chlorine-containing group, e.g. higher than 0.1 % by weight, the adhesive shows less pot life and less curing properties at a medium temperature, and thereby organic components of the adhesive are dissolved out, and as a result, the quality of water is lowered. Thus, the epoxy resin used in the conventional epoxy resin adhesive is limited to the resin having a content of the saponifiable chlorine-containing group of less than 0.1 % by weight.

## Brief Description of the Invention

The present inventors have studied on improvement of the two-part epoxy adhesive suitable for adhering the inner lining hose of water tube so as to satisfy the demands for curability at a medium temperature, long pot life and no effect on the quality of water, and have found that when a modified aliphatic polyamine is used as the curing agent and further a liquid imidazole is incorporated as a curing auxiliary, the demands as mentioned above are satisfied and further it is possible to use an epoxy resin having a content of a saponifiable chlorine-containing group of up to 0.25 % by weight.

An object of the invention is to provide an improved two-part epoxy resin adhesive suitable for adhering an inner lining hose on the inner face of damaged water tube. Another object of the invention is to provide a two-part epoxy resin adhesive having long pot life, curability at a medium temperature and being no effective on the quality of water. A further object of the invention is to provide an adhesive for inner lining hose of water tube containing an epoxy resin having a content of a saponifiable chlorine-containing group of up to 0.25 % by weight. These and other objects and advantages of the invention will be apparent to those skilled in the art from the following description.

## Detailed Description of the Invention

The two-part epoxy resin adhesive for inner lining hose of water tube comprises as the main component an epoxy resin having a content of a saponifiable chlorine-containing group of not more than 0.25 % by

weight and a curing agent comprising a modified aliphatic polyamine and a liquid imidazole as a curing auxiliary.

The epoxy resin used as the main component is preferably bisphenol type epoxy resins (e.g. bisphenol A, bisphenol F, brominated bisphenol A, bisphenol AD diglycidyl ether, bisphenol A alkylene oxide adduct diglycidyl ether, etc.). Commercially available bisphenol type epoxy resins are "Epikote 815, 819, 807, 828, 832, and 836" (manufactured by Yuka-Shell Epoxy Co., Ltd.), "DER 330, 331, 332, 334, and 337" (manufactured by Dow Chemical Co., Ltd.), "Adeka Resin Ep4000" (manufactured by Asahi Denka Kogyo K.K.), "Epiclon 800, and 830" (manufactured by Dainippon Ink and Chemicals, Inc.), among which those having a content of a saponifiable chlorine-containing group of not more than 0.25 % by weight are selected.

The modified aliphatic polyamine includes epoxy-modified products or acrylonitrile-modified products of polyoxypropylenediamine, m-xylylenediamine, isophoronediamine, and the like. Commercially available products of these modified aliphatic polyamine are "Daitocurar D-677" (an epoxy-modified product of polyoxypropylenediamine, manufactured by Daito Sangyo K.K.), "Daitocurar J-2495" (an acrylonitrile-modified product of polyoxypropylenediamine, manufactured by the same compound as above), "Daitocurar G-1824LB" (an epoxy-modified product of m-xylylenediamine, manufactured by the same company as above), "Adeka Hardner EH-233S" (an acrylonitrile-modified product of m-xylylenediamine, manufactured by Asahi Denka Kogyo K.K.), "Daitocurar I-2757" (an epoxy-modified product of isophoronediamine, manufactured by Daito Sangyo K.K.), and "Ancamine 1618F, 1618, and 1895" (an epoxy-modified product of isophoronediamine, manufactured by A. C. I. Japan K.K.), and the like. The modified aliphatic polyamines are usually used in an amount of 30 to 50 parts by weight to 100 parts by weight of the above epoxy resin.

The liquid imidazole used in this invention includes 1-isobutyl-2-methylimidazole (e.g. "Epicure IBMI-12", manufactured by Yuka-Shell Epoxy K.K.), 1,2-dimethylimidazole, 1-benzyl-2-methylimidazole (e.g. "IB2MZ", manufactured by Shikoku Kasei K.K.), 2-ethyl-4(5)-methylimidazole, 1-cyanoethyl-2-ethyl-4(5)-methylimidazole, 2-ethyl-4-methylimidazole, 1-aminoethyl-2-methylimidazole, 1-(cyanoethylaminoethyl)-2-methylimidazole, and the like. These liquid imidazoles function as a curing auxiliary and is used in such an amount that the ratio of the modified aliphatic polyamine : the liquid imidazole is in the range of 100 : 6 to 12 by weight. When the liquid imidazole is used in an amount of less than the above lower limit, the adhesive shows inferior curing properties at a medium temperature and further bad effect on the quality of water, and on the other hand, when the amount is more than the above upper limit, the adhesive has shorter pot life and bad effect on the quality of water, while the curability at a medium temperature is almost the same.

The adhesive for inner lining hose of water tube of the invention comprises the main epoxy resin component and the curing component of a modified aliphatic polyamine and a liquid imidazole in the form of two-part, and other conventional additives may optionally be incorporated into either one or both of the main component part and the curing component part in an appropriate amount, unless the quality of water is affected. Said additives include, for example, fillers (e.g. calcium carbonate, clay, talc, colloidal silica, red iron oxide, etc.), pigments, plasticizers, curing-promoting catalysts, antioxidants, and the like.

This invention is illustrated by the following Examples and Reference Examples but should not be construed to be limited thereto.

Examples 1 to 10 and Reference Examples 1 to 4

(1) Two-part epoxy resin adhesives:

Adhesives were prepared by using the components as shown in Table 1 in the amounts shown therein, and the following properties were tested, which results are also shown in Table 1.

The used epoxy resins are various grades of "Epikote 828" (manufactured by Yuka-Shell Epoxy K.K.) having various contents of the saponifiable chlorine-containing group. The used modified aliphatic polyamine is an acrylonitrile-modified product of polyoxypropylenediamine (tradename "Daitocurar J-2495", manufactured by Daito Sangyo K.K.) or an epoxy-modified product of polyoxypropylenediamine (tradename "Daitocurar D-677", manufactured by the same company), and the used liquid imidazole is 1-isobutyl-2-methylimidazole (tradename "Epicure IBMI-12", manufactured by Yuka-Shell Epoxy K.K.).

(2) Curability

Under the curing conditions as shown in Table 1, Shore D value and Barcol value were measured.

(3) Dissolution test

It was measured in a similar manner as defined in a Standard of Japan Water Works Association JWWA K-135, that is, by curing at 70°C for 2 hours and washing with flowing water for one hour.

The values conforming to the standard of the dissolution of each component are as follows:

| | |
|---|---|
| Consumed amount of Potassium permanganate: | less than 2 mg/liter |
| Reduced amount of the remaining chlorine: | less than 0.7 mg/liter |
| Cyanogen: | should not be detected |
| Phenols: | less than 0.005 mg/liter |

[Note]: The above values are used as indexes for contents of organic components in water, and less values mean higher quality of water.

(4) Pot life

By using the two-part adhesive (5 kg), time till gelation occurs at 20°C was measured.

Table 1

| | Example Nos. | | | | | | |
|---|---|---|---|---|---|---|---|
| | 1 | 2 | 3 | 4 | 5 | 6 | 7 |
| Main component: | | | | | | | |
| Epicote 828: | | | | | | | |
| content of saponif. Cl-contain. group 0.03 | 300 | - | - | - | 300 | - | - |
| content of saponif. Cl-contain. group 0.08 | - | 300 | - | - | - | 300 | - |
| content of saponif. Cl-contain. group 0.17 | - | - | 300 | - | - | - | 300 |
| content of saponif. Cl-contain. group 0.22 | - | - | - | 300 | - | - | - |
| Curing component: | | | | | | | |
| Ditochlare J-2495 | 139 | 139 | 139 | 139 | - | - | - |
| Ditochlare D-677 | - | - | - | - | 139 | 139 | 139 |
| Epicure IBMI-12 | 11 | 11 | 11 | 11 | 11 | 11 | 11 |
| Curability (Shore D value/Barcol value) | | | | | | | |
| 60°C x 2 hr. | 82/16 | 82/14 | 80/2 | 80/2 | 85/21 | 84/16 | 83/15 |
| 60°C x 3 hr. | 84/21 | 83/21 | 83/17 | 83/15 | 86/24 | 86/23 | 85/23 |
| 70°C x 1 hr. | 83/20 | 83/16 | 83/15 | 81/9 | 85/24 | 84/24 | 84/22 |
| 70°C x 2 hr. | 83/22 | 83/22 | 83/20 | 83/18 | 85/26 | 85/26 | 85/26 |
| Dissolution test: | | | | | | | |
| Consumed amount of K permang. (mg/l) | 0.6 | 0.6 | 0.8 | 1.2 | 0.2 | 0.2 | 0.5 |
| Reduced amount of remain. Cl (mg/l) | 0.4 | 0.4 | 0.4 | 0.5 | 0.4 | 0.4 | 0.4 |
| Cyanogen | Non | Non | Non | Non | Non | Non | Non |
| Phenols (mg/l) | Less than 0.005 | Less than 0.005 | Less than 0.005 | Less than 0.005 | Less than 0.005 | Less than 0.005 | Less than 0.005 |
| Pot life (minute) | 550 | 570 | 580 | 620 | 300 | 300 | 350 |

- to be continued -

Table 1 (Continue)

| | Ex. Nos. | | | Ref. Ex. Nos. | | | |
|---|---|---|---|---|---|---|---|
| | 8 | 9 | 10 | 1 | 2 | 3 | 4 |
| Main component: | | | | | | | |
| Epicote 828: | | | | | | | |
| content of saponif. Cl-contain. group 0.03 | - | 300 | 300 | 300 | - | 300 | - |
| 0.08 | - | - | - | - | - | - | - |
| 0.17 | - | - | - | - | - | - | - |
| 0.22 | 300 | - | - | - | 300 | - | 300 |
| Curing component: | | | | | | | |
| Ditochlare J-2495 | - | 93 | - | 150 | 150 | - | - |
| Ditochlare D-677 | 139 | - | 93 | - | - | 150 | 150 |
| Epicure IBMI-12 | 11 | 7 | 7 | - | - | - | - |
| Curability (Shore D value/B value) | | | | | | | |
| 60°C x 2 hr. | 80/12 | 83/20 | 85/24 | Not cured | Not cured | 80/2 | 80/6 |
| 60°C x 3 hr. | 85/22 | 86/26 | 86/27 | 70/0 | 70/0 | 83/14 | 84/16 |
| 70°C x 1 hr. | 83/22 | 85/25 | 86/28 | Not cured | Not cured | 80/4 | 82/9 |
| 70°C x 2 hr. | 85/26 | 85/27 | 86/29 | 77/0 | 78/0 | 84/15 | 84/15 |
| Dissolution test: | | | | | | | |
| Consumed amount of K permang. (mg/l) | 0.7 | 1.5 | 1.0 | 10.5 | 13.5 | 4.5 | 4.7 |
| Reduced amount of remain. Cl (mg/l) | 0.4 | 0.6 | 0.4 | 1.0 | 0.9 | 0.8 | 0.8 |
| Cyanogen | Non | Non | Non | Non | Non | Non | Non |
| Phenols (mg/l) | Less than 0.005 | Less than 0.005 | Less than 0.005 | Less than 0.005 | Less than 0.005 | Less than 0.005 | Less than 0.005 |
| Pot life (minute) | 400 | 430 | 300 | 400 | - | - | - |

## Effects of the Invention

As is seen from Table 1, when a combination of a modified aliphtalic polyamine and a liquid imidazole is used as the curing component, the adhesive has a long pot life as longer than 4 hours (240 minutes) and excellent curing property in short time at a medium temperature (that is, Shore D value become more than

80, which means that the curing is completed), and further the quality of water is conformable with the standard even by using the epoxy resin having a content of saponifiable chlorine-containing group of 0.22 %. On the other hand, when a liquid imidazole is not used as in Reference Examples, the adhesive shows less curability at a medium temperature and inadequate quality of water. The required quality of water is defined in JWWA K-135 as mentioned above. That is, the consumed amount of potassium permanganate and redued amount of remaining chlorine, which are indexes for the contents of organic compounds, should be less than the standard for satisfying the quality of water.

The adhesive of this invention using a modified aliphatic polyamine and a liquid imidazole as the curing component has excellent curability at a medium temperature, and further shows a consumed amount of potassium permanganate of less than 2 mg/liter, a reduced amount of remaining chlorine of less than 0.7 mg/liter and no cyanogen and a content of phenols of less than 0.005 mg/liter which satisfy the standard defined by JWWA.

## Claims

**1.** An adhesive for adhering an inner lining hose to water tube, which comprises as the main component an epoxy resin having a content of a saponifiable chlorine-containing group of not more than 0.25 % by weight and as the curing component a modified aliphatic polyamine and a liquid imidazole compound.

**2.** The adhesive according to claim 1, wherein the modified aliphatic polyamine and liquid imidazole compound are contained in a ratio of 100 : 6 to 12 by weight.

**3.** The adhesive according to claim 1, wherein the epoxy resin is a bisphenol type epoxy resin.

**4.** The adhesive according to claim 1, wherein the modified aliphatic polyamine is a member selected from the group consisting of an epoxy-modified product and acrylonitrile-modified product of polyoxypropylenediamine, m-xylylenediamine and isophoronediamine.

**5.** The adhesive according to claim 1, wherein the liquid imidazole is a member selected from the group consisting of 1-isobutyl-2-methylimidazole, 1,2-dimethylimidazole, 1-benzyl-2-methylimidazole, 2-ethyl-4(5)-methylimidazole, 1-cyanoethyl-2-ethyl-4(5)-methylimidazole, 2-ethyl-4-methylimidazole, 1-aminoethyl-2-methylimidazole, and 1-(cyanoethylaminoethyl)-2-methylimidazole.